# EUROPEAN PATENT SPECIFICATION

(11) **EP 2 685 015 B1**
(45) Date of publication and mention of the grant of the patent: **06.11.2019**
(21) Application number: 13175912.8
(22) Date of filing: 10.07.2013
(51) Int. Cl.: E03F 5/02, E03F 7/04, E03F 7/06, F16L 55/10, F16L 55/124, E03F 9/00, F16L 55/24

(54) **Method of installing equipment in the mouth of a side branch pipe**
Verfahren zur Installation von Ausrüstung in die Öffnung eines seitlichen Abzweigrohrs
Procédé d'installation d'un équipement dans la bouche d'un tuyau d'embranchement latéral

(30) Priority: 13.07.2012 DK 201270427
(43) Date of publication of application: 15.01.2014
(73) Proprietor: Ratèl APS, 6000 Kolding (DK)
(72) Inventor: Knudsen, Hans, 6000 Kolding (DK)
(74) Representative: Larsen & Birkeholm A/S

(56) References cited:
- EP-A1- 2 113 615
- GB-A- 2 148 835
- US-A- 231 015
- US-A- 5 232 205
- US-A- 5 826 609
- US-A1- 2005 111 919

## Description

### Field of the Invention

The present invention relates to method of installing equipment in the mouth of a side branch pipe.

### Background of the Invention

In pipe systems such as for example sewer systems or other similar systems it is often desirable to be able to install equipment in the system for various reasons.

The present invention will be discussed with respect to a sewer system in which a pest barrier or a pest trap is arranged, but the method according to the invention are, as will be clear from the explanation below, not restricted to this type of equipment or to sewer systems, but will be applicable to any pipe system where it is desirable to install any type of equipment which might fit into a side branch.

Typically installation of equipment at the bottom of a well or in a side branch branching out from the well is carried out by a person entering the well and manually installing the desired equipment, for example by brackets fastened by bolts or the like directly into the side of the well. Due to the inherent danger of working in a well, this operation usually requires the presence of another person on the surface as a safety precaution. In other instances depending on the fluids being transported in the pipe system it may also be necessary to provide adequate ventilation in order to ensure that the working environment is not harmful to the worker inside the well. A further problem arises in all those wells where it is not possible for a person to enter and where the side branches are positioned out of reach. For these wells it is a very cumbersome process to install equipment, and often it is avoided or dispensed with.

For other purposes it is known to install devices in underground pipes. One example is disclosed in GB1531213 wherein expandable plugs are placed in a pipeline - typically gasline, in order to block of the flow in a section of the pipe while maintenance or repairs are carried our. The device is manipulated into the pipeline by means of an attachment pipe, and tilted into a blocking position by a hinge construction comprising a link in one end of the device and a cord attached to another end, whereby by pulling in the cord, the link and device rotates into position in the pipe, after which the device is inflated in order to block the flow of medium/gas.

A similar device and installation method is disclosed in US2927609, US1889621, and US4040450. Common for all these devices and installation methods is that they are designed to completely block of the flow of medium in the pipe, they are for temporary installation, and they require special access wells or branch pipes in order to be installed. The also rely on hinge constructions in order to swing the device into place in the pipe, EP2113615A1 discloses a method of installing a two-way barrier for preventing rats or other vermin from entering a sewage pipe system.

### Object of the Invention

It is therefore an object of the present invention to provide a method which provides a simple, reliable, fast and relatively easy method of installing different types of equipment in side branches of a well.

### Description of the Invention

The invention addresses this by suggesting a method of installing equipment in the mouth of a side branch pipe in the lower section of a well according to the method steps of claim 1.

With this method the size of the well has no influence on the installation procedure of the equipment as long as it is possible to pass the equipment through the well where typically the manhole covering the well will be the decisive dimension which has to be overcome.

As nothing has to be fastened immediately adjacent the mouth of the side branch pipe it is not necessary for anybody to enter the well, and as such the method may be used for any type of well substantially having the side branch pipe at any depth from the surface. In order to reach down into the well the method requires that the equipment is mounted on a pole, and as such the length of the pole or the person's ability to handle the pole is decisive for the success of the method. In practice installation of equipment in wells at a depth of 7-8 meters has proven possible, even much faster than the traditional method of installing equipment at the bottom of wells.

The flexible member in combination with the engagement between the equipment and an upper part of the side branch pipe has proven to be an effective system in that the flexible member when tightened will retain the equipment in a stable and fixed relationship with respect to the side branch pipe. This is further emphasized by the fact that the flexible member is positioned substantially adjacent the wall of the well such that the effective pull in the equipment in the upwards direction will be substantially vertical whereby there will be no urge for the equipment to be withdrawn from the side branch pipe. In a further advantageous embodiment the equipment is provided with an upper member having a shape corresponding to another part of the cross-section of the branch pipe such that a firm, reliable and solid engagement may be achieved between the equipment and the branch pipe. In this connection it should be noted that the upper member may be a special part which is attached to any equipment, for example by suitable brackets or the like, or it may be incorporated in the equipment to be installed in the side branch pipe as for example is the case where the equipment to be placed is a pest barrier or a pest trap as will be discussed more extensively below.

Due to the flexibility of the flexible member a steady and substantially constant biasing force is provided such that the equipment consistently will be urged against the upper section of the side branch pipe. The flexible member may be simply a rope with an inherent flexible characteristic, or the rope where it is engaged with the equipment may be provided with a spring, for example a helical spring, such that the spring force is determining the force by which the equipment is urged against the upper section of the branch pipe.

In a further advantageous method step step f) is further developed such that a mounting and fixation tool is used, which tool is arranged in an upper part of the well, where said tool comprises means for releasably fastening said tool inside said well, and means for guiding said flexible member close to the inner wall at least a distance immediately above said branch pipe, and means for releasably fixating said flexible member, to said mounting and fixating tool.

The fixation tool having means for guiding the flexible member close to the wall where for example the means may be a pulley or roller arranged adjacent the end of the fixation tool ensures that the force imparted to the flexible member and thereby to the equipment to be mounted in the branch pipe is and remains as close to the wall of the well as possible. Depending on the constitution of the well wall the mounting and fixation tool may be directly mounted in the sides of the well, especially in wells having a corrugated inner structure or may be equipped with a bracket for engagement with the rim of the well.

Furthermore, in order to retain the mounting and fixation tool in a fixed position inside the well the mounting and fixation tool may be provided with an expansion mechanism such that the ends of the fixation tool can be urged against the inside wall of the well and be locked in this position. By undoing the lock, which may be constituted by a bolt or the like, it is possible to remove the fixation tool from the well again.

In addition, the mounting and fixation tool is provided with means for releasably fixating the flexible member, for example in the shape of a clamp or a cleat where the flexible member is a rope, or any other suitable means.

As not all wells are cylindrical it is in some instances necessary to use a different mounting and fixation tool which is a further development of the mounting and fixation tool mentioned above such that it is possible to mount the mounting and fixation tool adjacent the upper end of the well where the diameter of the well may be substantially less than the diameter of the well further down and at the same time ensure that the flexible member is forced close to the inner wall of the well in order to provide the substantially vertical pull in the equipment to be mounted in the branch pipe.

It is therefore foreseen that the mounting and fixation tool further comprises a secondary guide member pivotably arranged on the extendable rod in a pivot point between the ends of the rod, where said secondary guide member in a first distal end is provided with means for guiding a flexible member, and adjacent the opposite end projecting past the pivot point is provided with a locking member which will lock the secondary guide member in a determined angle relative to the extendable rod, such that for wells having a larger diameter down hole and/or provided with a cone adjacent the upper end of the well, and where before step f) the flexible member attached to the equipment is treaded through the means for guiding the flexible member arranged in the distal end of the secondary guide member, and the secondary guide member is pivoted into contact or immediately adjacent with the inner side of the well, straight above the branch pipe, in which position the secondary guide member by means of the locking member is locked.

This secondary guide member is pivotable in relation to the mounting and fixation tool which is releasably fixed to the inner wall of the well such that by pivoting a distal, usually lower end of the secondary guide member, can be brought into contact or almost contact with the wall of the well. By furthermore providing means for guiding the flexible member at the end of the secondary guide member it is ensured that the flexible member, at least for a distance above the equipment which is to be mounted in the branch pipe, is subjected to a substantially vertical pull close to the wall.

The secondary guide member is furthermore provided with a locking member such that it is possible to fixate the secondary guide member when the distal end of the secondary guide member is in contact or immediately adjacent the wall such that a reliable and durable vertical pull may be exerted on the equipment.

A mounting and fixation tool for use in a method as described above is also described, wherein the mounting and fixation tool is special in that the tool comprises an extendable rod, where means are provided for locking said rod in a determined length, where means are arranged in either end of the rod for engaging the sides of said well, and where guide means adjacent, but not projecting past the distal end of the rod is provided with means for guiding a flexible member, such as a rope or the like, and further that means such as a clamp or cleat for releasably fastening said flexible member is provided on said mounting tool.

Naturally the mounting and fixation tool does provide and benefit from the same advantages as already discussed above with reference to the method.

### Description of the Drawing

The invention will now be explained in further detail with reference to the accompanying drawing wherein
- Figure 1 and 2: illustrate typical cross-sections through two different types of manholes leading to a branch pipe
- Figure 3: illustrates how the pest barrier 1 is arranged in the mouth of the branch pipe 12 by inserting part of the pest barrier 1 inside the branch pipe 12 and by pulling upwards in the flexible member 2 an upper part 5
- Figure 4: illustrates a view inside the branch pipe
- Figure 5: illustrates various inner diameters of wells
- Figure 6: illustrates a mounting and fixation tool
- Figure 7: illustrates the coupling means 4 between the equipment in the shape of a pest barrier 1 and the flexible member 2
- Figure 8: illustrates a further example of a mounting and fixating tool

### Detailed Description of the Invention

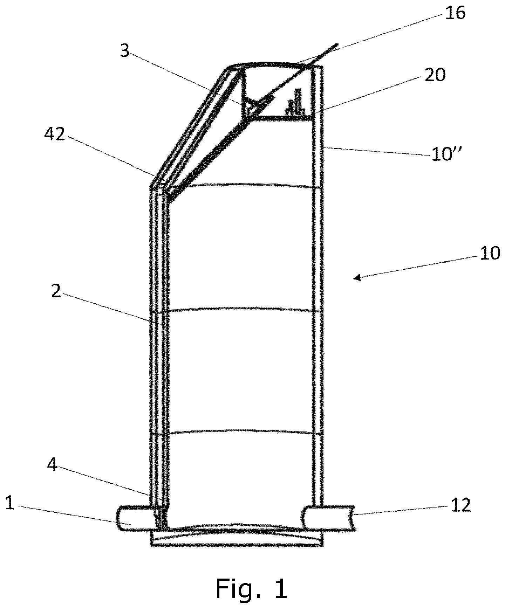

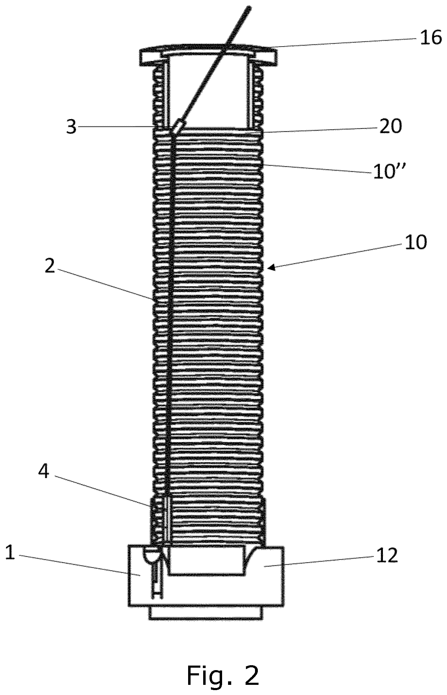

In figures 1 and 2 are illustrated typical cross-sections through two different types of manholes leading to a branch pipe. The manholes or wells 10 provide access to a branch pipe 12 arranged at a certain distance below the surface of the ground 14. In order to connect the manhole opening 16 to the branch pipe 12 a well 10 comprising a number of sections are assembled to form the well. The well illustrated in figure 1 has as its uppermost element 10" a cone.

In both figure 1 and figure 2, equipment 1 in the shape of a pest barrier is arranged in the branch pipe 12 in order to deny pests such as rats and the like from travelling through the particular branch pipe. The pest barrier 1 is by means of a flexible member 2 connected to a mounting and fixating tool 20 arranged adjacent the upper end of the well 10. The mounting and fixating tool 20 is provided with means 3, in this instance in the shape of a clamp or cleat to releasably fasten the flexible member 2 to the mounting and fixating tool 20.

The flexible members in these embodiments in the shape of a rope 2, is by means of a coupling unit 4 attached to the pest barrier one. The coupling unit 4 comprises a spring such that by tightening the rope 2 and fastening it in the fastening means 3 on the mounting and fixating member 20 the spring in the coupling member 4 will ensure that the pest barrier 1 is always subjected to a substantially vertical pull urging/biasing the upper surface of the pest barrier against the inside of the branch pipe 12.

Figure 3 further illustrates how the pest barrier 1 is arranged in the mouth of the branch pipe 12 by inserting part of the pest barrier 1 inside the branch pipe 12 and by pulling upwards in the flexible member 2 an upper part 5 which in this embodiment is shaped to have a shape corresponding to part of the cross-section of the branch pipe 12 ensuring good contact and thereby good engagement between the pest barrier 1 and the branch pipe. The coupling member 4 is in this embodiment an integrated part of the pest barrier 1 and provides a connection between the flexible member 2 and the pest barrier via a spring member such that the spring force will provide a more or less constant upward force forcing the engagement surface 5 against the inside of the branch pipe 12.

Furthermore, the coupling member 4 is provided with hooks 7 where the hooks 7 are open downwards such that the pest barrier may be attached to a mounting pole (not illustrated) and due to gravity's force on the pest barrier the pole may be released from the hooks 7 when the pest barrier is positioned as illustrated in figure 3 simply by moving the pole further downwards releasing the engagement from the hooks 7. When desiring to remove the pest barrier the pole is again positioned such that it engages the hooks 7 and the flexible member 2 is then released.

In this situation it will be possible to lower the pest barrier further relative to the side branch pipe and in this manner release the surface 5 from engagement with the inside of the branch pipe 12, pull the pest barrier out into the well 10 and by withdrawing the pole with the pest barrier attached retrieve the pest barrier effortlessly to the surface 14.

Naturally, although the present invention is mainly described with respect to placement of a pest barrier, this is for illustrative purposes only, in that any type of equipment fitting inside the branch pipe and having an engagement surface 5 as well as means for being attached to the mounting pole will be suitable to be placed with the present invention.

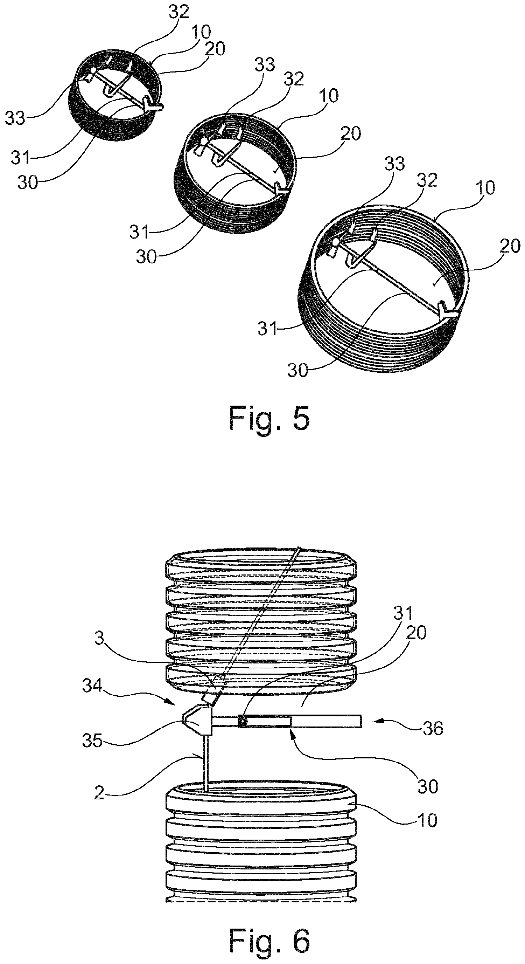

In figure 4 is illustrated a view inside the branch pipe where it is evident that the engagement surface 5 of the pest barrier 1 is in contact with another part of the branch pipe and due to their mutually corresponding shapes a good and firm contact is established between the pest barrier 1 and the branch pipe 12. This contact is maintained due to the flexible member 2. In figure 5 is illustrated various inner diameters of wells, in this embodiment wells having a corrugated profile. In order to be able to use the present invention with any type of well diameter, the mounting and fixating tool is adjustable corresponding to the inner diameter of the well 10. This is in this embodiment achieved by providing the mounting and fixating member with a telescopic bar 30 such that the bar 30 may be extended whereby the ends of the bar fit tightly against the inner wall of the well 10. In the correct position the telescope may be fixated by means of a bolt 31 relatively fixating the two parts of the bar 30 in the position where the ends of the bar 30 is in firm engagement with the inner wall of the well 10.

In this particular embodiment the bar 30 is provided with brackets 32, 33. The brackets are used to mount equipment such as batteries, data-loggers, GSM, transmitters/receivers, computers, displays etc. which will through wires communicate with the equipment installed in the branch pipe in the lowermost section of the well 10. By arranging this type of equipment adjacent the surface it is easily accessible for maintenance, control etc.

In figure 6 is illustrated a mounting and fixation tool 20 where part of the well has been removed in order to illustrate the mounting and fixation tool 20. The tool 20 comprises a telescopic bar 30 which length may be expanded and fixated by the bolt 31 as described above with reference to figure 5. In one end 34 of the tool 20 an engagement bracket 35 is provided where the engagement bracket 35 is designed to engage in the corrugations on the interior side of the well 10 in order to maintain the tool 20 in a fixed vertical position relative to the branch pipe below. Inside the bracket 35 is provided guide means, for example a pulley or a wheel such that the flexible member 2 will be guided past the bracket and into the clamp or cleat 3. The clamp or cleat 3 will releasably secure the flexible member such that it is only possible to draw the flexible member further upwards while positioning the clamp or cleat 3. In order to release the flexible member 2 from the cleat the flexible member is moved out of the cleat and it will then be completely free and only attached to the equipment inserted in the pipe branch below.

In the opposite end 36 of the tool 20 the dimensions of the bar are such that it will also fit inside a corrugation in the interior wall of the well fixing this end of the mounting and fixating tool.

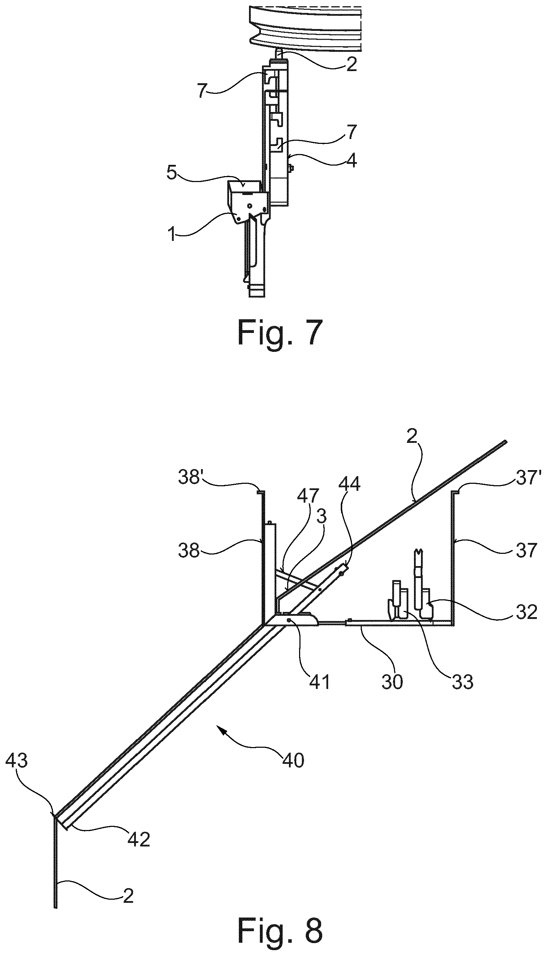

Turning to figure 8 a further example of a mounting and fixating tool is illustrated. In wells having a corrugated interior wall the bar 30 is provided with mounting brackets 37, 38 where the distal ends of the mounting brackets 37, 38 are provided with a flange 37', 38'. The flanges 37', 38' are designed to engage an upper rim of the manhole such that the bar 30 hangs in the mounting brackets 37, 38 into the interior of the well. In a similar fashion a clamp or cleat 3 is arranged for fastening of the flexible member 2. As was the case with the mounting and fastening tools described with reference to figure 5 this configuration may also be provided with brackets 32, 33 for mounting various equipment.

In situations where the well 10 is provided with a top cone 10" as illustrated in figure 1 the mounting and fastening tool may further be provided with a secondary guide member 40. The secondary guide member 40 is arranged such that it can pivot relative to the bar 30 in a pivot point 41. In a first distal end 42 of the secondary guide member means in the shape of a ring or pulley 43 is provided for guiding the flexible member 2 and maintaining the flexible member 2 slidingly in contact with the first distal end 42.

Adjacent the opposite end 44 of the secondary guide member 40 is provided a locking member 45 making it possible to fixate the secondary guide member 40 in an angle relative to the bar 30 whereby the flexible member 2 is maintained at a certain distance.

Turning to figure 1 it is clear that by pivoting the secondary guide member 40 it is possible to position the first distal end 42 immediately adjacent the inner wall of the well 10 facilitating a substantially vertical pull on the equipment arranged in the side branch pipe in the lower section of the well 10. In this manner, by providing the secondary guide member it becomes possible to adapt the mounting and fastening tool to substantially any configuration of manholes.

Returning to figure 7 the coupling means 4 between the equipment in the shape of a pest barrier 1 and the flexible member 2 is illustrated. The coupling member 4 comprises hooks 7 in which the mounting pole (not illustrated) may detachably be arranged such that during insertion/mounting of the equipment 1 the equipment hangs from appropriate projections engaging the hooks 7 in the coupling member 4, and once the flexible member has been tightened whereby the engagement surface 5 of the equipment 1 engages an upper section of the branch pipe the mounting pole may be released from the hooks 7 of the coupling member and thereby from the equipment which is then correctly positioned and maintained in place by the flexible member 2 as described above.

The invention has now been explained with reference to a particular example where a pest barrier/pest barrier is used an example. It is, however, clear that any type of equipment which is suitable to be positioned in a side branch pipe in a pipe system will be suitable to be mounted with a mounting and fastening tool using the method according to the invention as disclosed in the appended claims.

## Claims

1. Method of installing equipment (1) in the mouth of a side branch pipe (12) in the lower section of a well (10) of a pipe installation, said well (10) having and inner wall defining the well (10), in particular a sewer system, comprising the following steps:
a) determining the dimension of the mouth of the side branch pipe (12), and selecting an equipment (1) having an appropriate corresponding outer dimension for a part of the equipment (1) to fit inside said mouth of the side branch pipe (12);
b) releasably attaching the selected equipment (1) to a mounting pole
c) attaching a flexible member (2) to said equipment (1)
d) lowering the equipment (1) down the well by means of the pole, and keeping an end of the flexible member (2) above the well (10);
e) inserting the equipment (1) into the mouth of the side branch pipe (12) in the lower section of the well (10) by means of the pole;
f) tightening the flexible member (2) along the inner wall of the well(10) and above the mouth of the branch pipe (12), providing a substantially vertical upwards force on the equipment (1), thereby fixing the equipment (1) against an upper part of the side branch pipe (12);
g) fixating the flexible member (2) inside the well (10); and
h) releasing the mounting pole from the equipment (1), and withdrawing the mounting pole from the well (10).

2. Method according to claim 1 wherein in step f) a mounting and fixating tool is used, which tool is arranged in an upper part of the well, where said tool comprises means for releasably fastening said tool inside said well, and means for guiding said flexible member close to the inner wall at least a distance immediately above said branch pipe, and means for releasably fixating said flexible member, to said mounting and fixating tool.

3. Method according to claim 2 where the mounting and fixating tool further comprises a secondary guide member pivotably arranged on an extendable rod in a pivot point between the ends of the rod, where said secondary guide member in a first distal end is provided with means for guiding a flexible member, and adjacent the opposite end projecting past the pivot point is provided with a locking member which will lock the secondary guide member in a determined angle relative to the extendable rod, such that the mounting and fixating tool is suitable for wells having a larger diameter down hole and/or provided with a cone adjacent the upper end of the well, and where before step f) the flexible member attached to the equipment is treaded through the means for guiding the flexible member arranged in the distal end of the secondary guide member, and the secondary guide member is pivoted into contact or immediately adjacent with the inner side of the well, straight above the branch pipe, in which position the secondary guide member by means of the locking member is locked.

4. Method according to claim 1, wherein the equipment is provided with an upper member, having a shape corresponding to an upper part of the cross section of the branch pipe.

5. Method according to claim 1, wherein the equipment is selected between one or more of the following: a pest extermination device; a pest barrier, a camera, a laser beam emitting and/or receiving device, water flow-meter/-alarm, motion detector.

## Patentansprüche

1. Verfahren zum Installieren von Ausrüstung (1) in die Öffnung eines seitlichen Abzweigrohrs (12) in dem unteren Bereich eines Schachts (10) einer Rohrinstallation, wobei der Schacht (10) eine Innenwand, die den Schacht (10) definiert, insbesondere ein Kanalisationssystem aufweist, wobei das Verfahren die folgenden Schritte umfasst:
a) Bestimmen der Abmessung der Öffnung des seitlichen Abzweigrohrs (12) und Auswählen einer Ausrüstung (1), die eine geeignete entsprechende Außenabmessung aufweist, damit ein Teil der Ausrüstung (1) in die Öffnung des seitlichen Abzweigrohrs (12) passt;
b) lösbares Anbringen der ausgewählten Ausrüstung (1) an einer Montagestange;
c) Anbringen eines flexiblen Elements (2) an der Ausrüstung (1) ;
d) Absenken der Ausrüstung (1) in den Schacht mittels der Stange und Beibehalten eines Endes des flexiblen Elements (2) oberhalb des Schachts (10);
e) Einführen der Ausrüstung (1) in die Öffnung des seitlichen Abzweigrohrs (12) in dem unteren Bereich des Schachts (10) mittels der Stange;
f) Straffen des flexiblen Elements (2) entlang der Innenwand des Schachts (10) und über der Öffnung des Abzweigrohrs (12), Bereitstellen einer im Allgemeinen vertikal nach oben gerichteten Kraft auf die Ausrüstung (1), wodurch die Ausrüstung (1) an einem oberen Teil des seitlichen Abzweigrohrs (12) fixiert wird,
g) Befestigen des flexiblen Elements (2) in dem Schacht (10); und
h) Lösen der Montagestange von der Ausrüstung (1) und Zurückziehen der Montagestange aus dem Schacht (10).

2. Verfahren nach Anspruch 1, wobei in Schritt f) ein Montage- und Befestigungswerkzeug verwendet wird, wobei dieses Werkzeug in einem oberen Teil des Schachts angeordnet ist, wobei das Werkzeug Mittel zum lösbaren Festmachen des Werkzeugs innerhalb des Schachts und Mittel zum Führen des flexiblen Elements nahe der Innenwand über mindestens eine Distanz unmittelbar über das Abzweigrohr und Mittel zum lösbaren Befestigen des flexiblen Elements an dem Montage- und Befestigungswerkzeug umfasst.

3. Verfahren nach Anspruch 2, wobei das Montage- und Befestigungswerkzeug ferner ein sekundäres Führungselement umfasst, das auf einem ausziehbaren Stab schwenkbar an einem Gelenkpunkt zwischen den Enden des Stabs angeordnet ist, wobei das sekundäre Führungselement an einem ersten distalen Ende mit Mitteln zum Führen eines flexiblen Elements versehen ist und benachbart dem gegenüberliegenden Ende, das über den Gelenkpunkt hinausragt, mit einem Verriegelungselement versehen ist, welches das sekundäre Führungselement in einem bestimmten Winkel relativ zu dem ausziehbaren Stab verriegelt, sodass das Montage- und Befestigungswerkzeug für Schächte, die untertage einen größeren Durchmesser aufweisen und/oder benachbart des oberen Endes des Schachts mit einem Zapfen versehen sind, geeignet ist, und wobei vor dem Schritt f) das flexible Element, das an der Ausrüstung angebracht ist, durch die Mittel zum Führen des flexiblen Elements gefädelt wird, die an dem distalen Ende des sekundären Führungselements angeordnet sind, und wobei das sekundäre Führungselement in einen Kontakt oder unmittelbar neben die Innenseite der Wand genau über dem Abzweigrohr geschwenkt wird, in welcher Position das sekundäre Führungselement mittels des Verriegelungselements verriegelt wird.

4. Verfahren nach Anspruch 1, wobei die Ausrüstung mit einem oberen Element versehen ist, das eine Form aufweist, die einem oberen Teil des Querschnitts des Abzweigrohrs entspricht.

5. Verfahren nach Anspruch 1, wobei die Ausrüstung ausgewählt ist zwischen einem oder mehreren der Folgenden: einer Vorrichtung zur Schädlingsbekämpfung; einer Schädlingssperre, einer Kamera, einer Vorrichtung, die einen Laserstrahl ausstrahlt oder diesen empfängt, einer/einem Wasserströmungsmessvorrichtung/-alarm, einem Bewegungsdetektor.

## Revendications

1. Procédé d'installation d'un équipement (1) dans la bouche d'un tuyau d'embranchement latéral (12) dans la section inférieure d'un puits (10) d'une installation de tuyauterie, ledit puits (10) ayant une paroi interne définissant le puits (10), en particulier un système d'égout, comprenant les étapes suivantes :
a) la détermination de la dimension de la bouche du tuyau d'embranchement latéral (12) et la sélection d'un équipement (1) ayant une dimension externe correspondante appropriée pour qu'une partie de l'équipement (1) s'adapte à l'intérieur de ladite bouche du tuyau d'embranchement latéral (12) ;
b) la fixation amovible de l'équipement sélectionné (1) sur un mât de montage ;
c) la fixation d'un élément flexible (2) sur ledit équipement (1) ;
d) la descente de l'équipement (1) au fond du puits au moyen du mât et le maintien d'une extrémité de l'élément flexible (2) au-dessus du puits (10) ;
e) l'insertion de l'équipement (1) dans la bouche du tuyau d'embranchement latéral (12) dans la section inférieure du puits (10) au moyen du mât ;
f) le serrage de l'élément flexible (2) le long de la paroi interne du puits (10) et au-dessus de la bouche du tuyau d'embranchement (12), en fournissant sur l'équipement (1) une force sensiblement verticale dirigée vers le haut, ce qui permet de fixer l'équipement (1) contre une partie supérieure du tuyau d'embranchement latéral (12),
g) la fixation de l'élément flexible (2) à l'intérieur du puits (10) ; et
h) la libération du mât de montage de l'équipement (1) et le retrait du mât de montage du puits (10).

2. Procédé selon la revendication 1, dans lequel, à l'étape f), un outil de montage et de fixation est utilisé, lequel outil est agencé dans une partie supérieure du puits, dans lequel ledit outil comprend des moyens pour fixer de manière libérable ledit outil à l'intérieur dudit puits, et des moyens pour guider ledit élément flexible à proximité de la paroi interne d'au moins une certaine distance immédiatement au-dessus dudit tuyau d'embranchement, et des moyens pour fixer de manière libérable ledit élément flexible sur ledit outil de montage et de fixation.

3. Procédé selon la revendication 2, dans lequel l'outil de montage et de fixation comprend en outre un élément de guidage secondaire agencé de manière pivotante sur une tige extensible à un point pivot entre les extrémités de la tige, dans lequel ledit élément de guidage secondaire comprend, dans une première extrémité distale, des moyens de guidage d'un élément flexible, et comprend, de manière adjacente à l'extrémité opposée faisant saillie au-delà du point pivot, un élément de verrouillage qui verrouillera l'élément de guidage secondaire à un angle déterminé par rapport à la tige extensible, tel que l'outil de montage et de fixation convient à des puits ayant un fond de trou de plus grand diamètre et/ou comprenant un cône adjacent à l'extrémité supérieure du puits et dans lequel, avant l'étape f), l'élément flexible attaché à l'équipement est enfoncé à travers les moyens de guidage de l'élément flexible agencés dans l'extrémité distale de l'élément de guidage secondaire, et l'élément de guidage secondaire est pivoté en étant en contact ou immédiatement adjacent au côté interne du puits, directement au-dessus du tuyau d'embranchement, position dans laquelle l'élément de guidage secondaire est verrouillé au moyen de l'élément de verrouillage.

4. Procédé selon la revendication 1, dans lequel l'équipement comprend un élément supérieur, ayant une forme correspondant à une partie supérieure de la section transversale du tuyau d'embranchement.

5. Procédé selon la revendication 1, dans lequel l'équipement est sélectionné entre un ou plusieurs des éléments suivants : un dispositif d'extermination des nuisibles ; une barrière contre les nuisibles, une caméra, un dispositif d'émission et/ou de réception de faisceau laser, un débitmètre/une alarme d'écoulement, un détecteur de mouvement.
